(19)

**Europäisches
Patentamt
European
Patent Office
Office européen
des brevets**

(11)  **EP 4 502 785 A1**

(12)  **EUROPEAN PATENT APPLICATION**

(43) Date of publication:
**05.02.2025  Bulletin 2025/06**

(21) Application number: **23189188.8**

(22) Date of filing: **02.08.2023**

(51) International Patent Classification (IPC):
**G06F 8/30** (2018.01)  **G06F 8/70** (2018.01)
**G06N 3/08** (2023.01)

(52) Cooperative Patent Classification (CPC):
**G06F 8/313; G06F 8/70; G06N 3/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Hildebrandt, Marcel
80634 München (DE)**
• **Mogoreanu, Serghei
81827 München (DE)**
• **Ringsquandl, Martin
83064 Raubling (DE)**

(74) Representative: **Siemens Patent Attorneys
Postfach 22 16 34
80506 München (DE)**

(54)  **METHOD AND SYSTEM FOR EXTRACTING COMPATIBILITY RULES FROM A BLACK BOX CONFIGURATION SOFTWARE**

(57)  In order to extract compatibility rules from black box configuration software, a candidate generator (CG) generates configuration candidates (CC), wherein each configuration candidate identifies components of an industrial automation system and their connections. An interface receives a validity label for each configuration candidate from a black-box configuration software (BBS). An observed configurations database (OC) stores each configuration candidate and its validity label. An inductive logic programming engine (ILPE) processes the content of the observed configurations database (OC) and outputs a rule base (RB) storing compatibility rules. This solution provides an alternative to -1- manual exploration of the search space, which would be infeasible due to the infinite number of possible configurations, -2-performing a random brute-force search, which would be inefficient, and -3- interviewing expert users of the black-box configuration software, which would be expensive and time-consuming. Embodiments provide a novel neural rule extraction system and include a candidate discriminator that can be seen as a soft validator, computing how likely each configuration is valid. In summary, a solution for recovering a large number of implicit rules from legacy software is provided, which is vital for maintaining knowledge with a retiring workforce.

FIG 4

EP 4 502 785 A1

## Description

Independent of the grammatical term usage, individuals with male, female or other gender identities are included within the term.

Obtaining high-quality digital representations real-world systems, i.e., so-called "digital twins", is a major challenge in industry. One of the main problems is integrating information from legacy software which contains a substantial amount of implicit domain knowledge. For example, device configuration software usually maintains a large rule base internally against which the input is checked. In case of configuration software for building up factory automation solutions, simple examples of such rules would include verifying whether the maximum load of a controller is not exceeded, matching voltage requirements of interconnected components, and verifying whether a controller has enough compute capacity to serve all connected digital outputs.

Oftentimes, however, such software is only available in compiled (binary) form with no access to the actual source code or rule base. This leads to black-box configuration software that is still used by domain experts, but impossible, or at least very costly, to interpret or debug. In the following, the term "black-box configuration software" is to be understood in this way.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for extracting compatibility rules from a black box configuration software, the following operations are performed by modules, wherein the modules are hardware modules and/or software modules executed by one or more processors:

- generating, by a candidate generator, configuration candidates, wherein each configuration candidate identifies components of an industrial automation system and their connections,
- receiving, from a black-box configuration software, for each configuration candidate a valid response or an invalid response and creating a corresponding validity label,
- storing, by an observed configurations database, each configuration candidate and its validity label, and
- outputting, by an inductive logic programming engine processing the content of the observed configurations database, a rule base storing compatibility rules.

The system for extracting compatibility rules from a black box configuration software comprises the following modules, wherein the modules are hardware modules and/or software modules executed by one or more processors:

- a candidate generator, configured for generating configuration candidates, wherein each configuration candidate identifies components of an industrial automation system and their connections,
- an interface, configured for receiving, from a black-box configuration software, for each configuration candidate a valid response or an invalid response and creating a corresponding validity label,
- an observed configurations database, configured for storing each configuration candidate and its validity label, and
- an inductive logic programming engine, configured for processing the content of the observed configurations database and outputting a rule base storing compatibility rules.

The compatibility rules are interpretable logical rules defining what makes a configuration valid, for example by specifying a required minimum compute capacity for a controller to serve all connected digital outputs.

The interface is for example a network interface and/or an application programming interface that is adapted to query the black-box configuration software.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices, or any other communication devices that can process data with computer support, processors, and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, provide an alternative to manual exploration of the search space, which would be infeasible due to the infinite number of possible configurations.

The method and system, or at least some of their embodiments, provide an alternative to performing a random brute-force search, which would be inefficient.

The method and system, or at least some of their embodiments, provide an alternative to interviewing expert users of the black-box configuration software, which would be expensive and time-consuming.

The method and system, or at least some of their embodiments, provide a novel neural rule extraction system that allows to retrieve rules from black-box configuration software more efficiently than brute-force.

The method and system, or at least some of their embodiments, include a candidate discriminator that can be seen as a soft validator, computing how likely the configuration is valid.

The method and system, or at least some of their embodiments, provide a solution for recovering a large number of implicit rules from legacy software, which is vital for maintaining knowledge with a retiring workforce. Black-box software is a major pain point in the digitalization of assets.

The method and system, or at least some of their embodiments, relieve users from having to manually create configurations or brute-force search spaces in order to extract knowledge from black-box configuration software.

In an embodiment of the method, the candidate generator receives as one of its inputs a domain vocabulary.

In another embodiment of the method, the candidate generator receives as one of its inputs a reward that is calculated by a candidate discriminator. The reward in particular encourages that the configuration candidates generated by the candidate generator are diverse and substantially different from the configuration candidates already stored in the observed configurations database.

In an embodiment of the method, the reward is high if the configuration candidate currently generated by the candidate generator leads to high uncertainty in the candidate discriminator. The reward is in particular calculated as the entropy of a predicted probability distribution of the candidate discriminator.

In another embodiment of the method, the candidate discriminator has been trained using binary cross entropy to act as a differentiable approximation of the rule base.

In an embodiment of the method, the candidate discriminator has been trained to learn which configurations are similar in a latent constraint space.

In another embodiment of the method, the candidate generator is a policy-based reinforcement learning agent that builds up each configuration candidate in an iterative fashion, in particular formulated as a Markov Decision Process, starting from an empty configuration and adding components and connections until a terminal state is reached.

In an embodiment of the method, the candidate generator is implemented as a Graph Convolutional Policy Network.

The computer program product comprises instructions which, when the program is executed by a computer, cause the computer to carry out the method.

The provisioning device stores and/or provides the computer program product.

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1    shows a first embodiment,

Fig. 2    shows another embodiment,

Fig. 3    shows an example of a manual configuration workflow,

Fig. 4    shows an overall system architecture,

Fig. 5    shows an example of a latent constraint space, and

Fig. 6    shows a flowchart of a possible exemplary embodiment of a method for extracting compatibility rules from a black box configuration software.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described modules can each be hardware modules or software modules. For example, a software module can be a software library; an individual procedure, subroutine, or function; or, depending on the programming paradigm, any other portion of software code that implements the function of the software module. A combination of hardware modules and software modules can occur, in particular, if some of the effects according to the invention are preferably exclusively implemented by special hardware (e.g., a processor in the form of an ASIC or FPGA) and some other part by software.

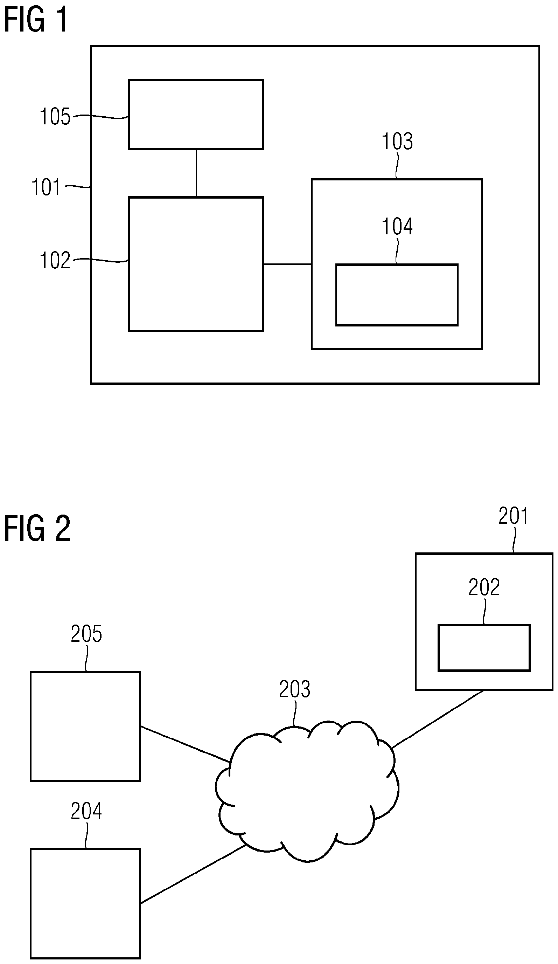

Fig. 1 shows one sample structure for computer-implementation of the invention which comprises:

| | |
|---|---|
| (101) | computer system |
| (102) | processor |
| (103) | memory |
| (104) | computer program (product) |
| (105) | user interface |

In this embodiment of the invention the computer program 104 comprises program instructions for carrying out the invention. The computer program 104 is stored in the memory 103 which renders, among others, the memory 103 and/or its related computer system 101 a provisioning device for the computer program 104. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

| | |
|---|---|
| (201) | provisioning device |
| (202) | computer program (product) |
| (203) | computer network/Internet |
| (204) | computer system |
| (205) | mobile device/smartphone |

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

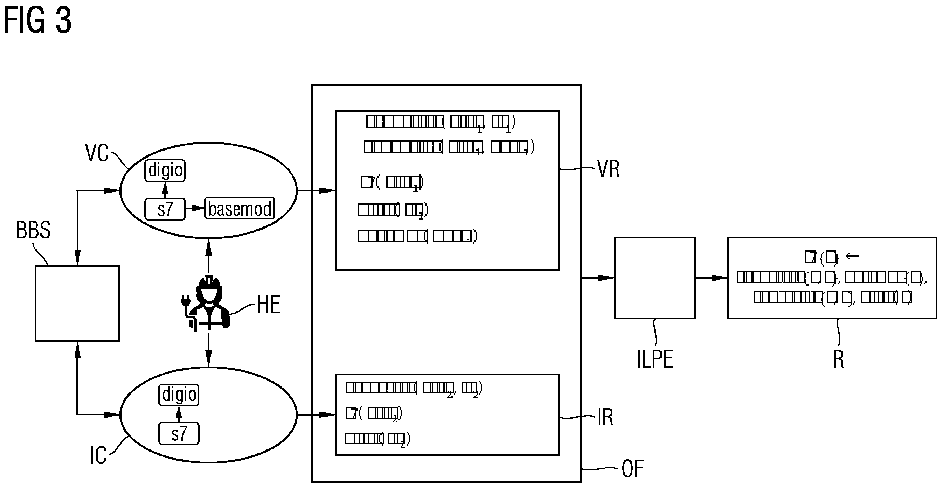

Preferably, the embodiments shown in Figs. 3 to 6 can be implemented with a structure as shown in Fig. 1 or Fig. 2.

The embodiments described in the following provide solutions that extract information from a black-box configuration software in the form of interpretable logical rules. The basic idea is to employ a reinforcement learning agent to generate inputs (configuration candidates) into the black-box configuration software, use a "valid" / "invalid" response from the black-box configuration software to obtain sets of positive and negative examples, and to employ an inductive logic programming (ILP) engine to turn those into a rule (which is likely present in the black-box configuration software's implicit rule base).

The embodiments described in the following employ reinforcement learning to generate configuration candidates efficiently, as the configuration search space is exponentially growing, making manual exploration infeasible. This problem has similarities with the problem of active learning, where a query strategy samples candidates from a pool of unlabeled data such that the informativeness of these samples is maximal. The embodiments described in the following deal with a pool of unlabeled data that is potentially infinite, i.e., every possible configuration.

Fig. 3 shows an example of a manual configuration workflow. A human expert HE interacts with a black-box configuration software BBS, creating two device configurations, a valid configuration VC and an invalid configuration IC. The black-box configuration software BBS then responds with a valid response VR or an invalid response IR, which are collected as observed facts OF.

Each configuration can be expressed in terms of logical predicates involving the configuration components, e.g., "connected(a,b)" or types such as "s7(a)". After obtaining a set of valid configurations VC and invalid configurations IC as observed facts OF, a rule learning system (here, an inductive logic programming engine ILPE) can extract (induce) rules R from the observations.

Some of the technical features of the embodiments described in the following are:

a) a Rule Extraction System, and
b) an end-to-end training procedure.

Each of these features is described in more detail below.

Rule Extraction System

Component Architecture

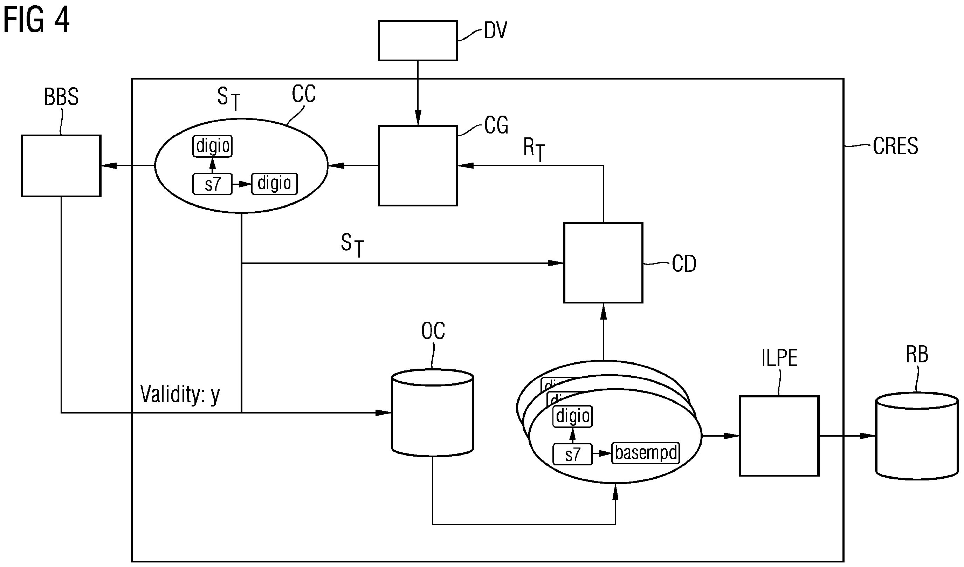

Fig. 4 shows an overall architecture of a compatibility rule extraction system CRES according to a current embodiment, receiving as input a domain vocabulary DV as well as outputs of a black-box configuration software BBS. The compatibility rule extraction system CRES outputs a rule base RB.

The compatibility rule extraction system CRES stores the inputs received from the black-box configuration software BBS (these inputs being validity labels for configuration candidates CC) along with the corresponding configuration candidates CC in an observed configurations database OC.

Candidate Discriminator

Within the compatibility rule extraction system CRES, a candidate discriminator CD encourages that configuration candidates CC generated by a candidate generator CG are diverse (and substantially different from already observed ones), since classifying already observed configuration candidates is simple and therefore the reward for the candidate generator CG would be small. Given a set of tuples $(x_i, y_i)$ with observed configuration candidate $x_i$, and its validity $y_i \in \{0,1\}$, the candidate discriminator CD function $D:X \to Y$ is trained using binary cross entropy

$$L_D = \sum_{i}^{k} -y_i \log\big(D(x_i)\big) - (1 - y_i) \log\big(1 - D(x_i)\big).$$

Thus, the candidate discriminator CD acts as a differentiable approximation of the rule base RB. The underlying idea here is that the candidate discriminator CD learns which configurations are similar in a latent constraint space, therefore assuming a lower dimensional manifold for the original data generation, not every possible combination of components may need to be tried.

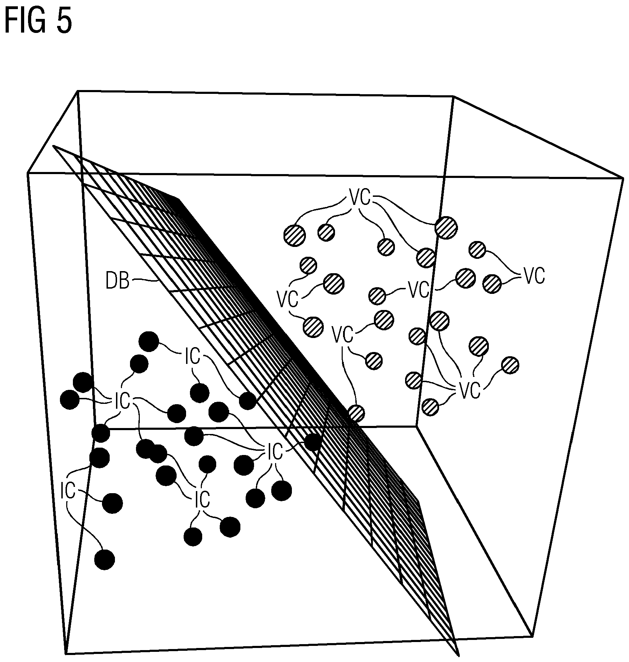

Fig. 5 shows an example of the latent constraint space mentioned above. In Fig. 5, a classifier is given by a hyperplane, which is a decision boundary DB that discriminates between valid configurations and invalid configurations. The validity of configurations that are close to the decision boundary DB (i.e., the hyperplane) is harder to predict and lead to larger entropy.

Candidate Generator

In the current embodiment, the candidate generator CG is a policy-based reinforcement learning agent that builds up a configuration candidate CC in an iterative fashion, formulated as a Markov Decision Process. Starting from the initial state space $S_0$, which is the empty configuration, it applies actions, namely addition of components and connections, until a final stop action or terminal state $S_T$ is reached. The agent receives a reward based on the terminal state $S_T$ which is given by:

$$r_T = -D(S_T) \cdot \log\big(D(S_T)\big),$$

which is the entropy of the predicted probability distribution of the candidate discriminator CD. In other words, the reward of the candidate generator CG is high if the produced final state candidate leads to high uncertainty in the candidate discriminator CD. Therefore, novel configuration candidates CC that are associated with a high uncertainty are encouraged. Based on the heuristic depicted in Fig. 5, the candidate generator CG attempts to generate configurations that are located close to the decision boundary DB shown in Fig. 5.

You, Jiaxuan, et al., Graph convolutional policy network for goal-directed molecular graph generation, Advances in neural information processing systems 31, 2018, discloses a Graph Convolutional Policy Network (GCPN), which is a neural architecture that can be used to implement the candidate generator CG. The entire contents of that document are incorporated herein by reference.

End-to-end Training Procedure

According to this embodiment of a training procedure for the compatibility rule extraction system CRES, initially the observed configurations database OC is empty, and the candidate generator CG and the candidate discriminator CD are randomly initialized neural networks.

Then the training iteratively goes through the following:

1. The candidate generator CG samples a new configuration candidate CC from its policy
2. The candidate discriminator CD gives a reward to the candidate generator CG based on the configuration candidate CC
3. The candidate generator CG updates its policy
4. The black-box configuration software BBS produces a validity label for the configuration candidate CC
5. The configuration candidate CC and its validity label are stored in the observed configuration database OC
6. Every n iterations, the candidate discriminator CD is trained based on the examples in the observed configurations database OC.

The training procedure ends based on some convergence criterion, e.g., when the candidate generator CG and candidate discriminator CD weight updates vanish.

After training is done, the candidate generator CG can still be used to sample more candidates.

Once enough observed configurations are obtained, an inductive logic programming engine ILPE produces a rule base.

Quinlan, J. Ross, Learning logical definitions from relations, Machine learning 5, 1990, 239-266, discloses algorithms that are suitable for implementing the inductive logic programming engine ILPE. The entire contents of that document are incorporated herein by reference.

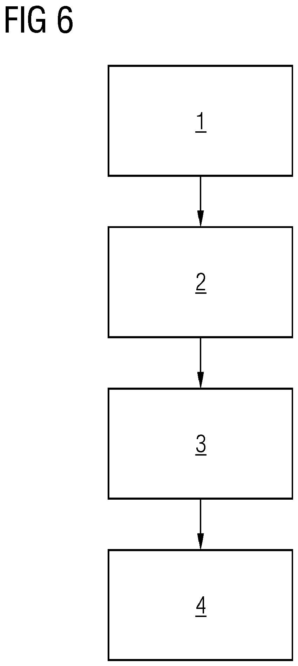

Fig. 6 shows a flowchart of a possible exemplary embodiment of a method for extracting compatibility rules from a black box configuration software.

In a first operation 1, a candidate generator generates configuration candidates, wherein each configuration candidate identifies components of an industrial automation system and their connections.

In a second operation 2, for each configuration candidate a valid response or an invalid response is received from a black-box configuration software, and a corresponding validity label is created.

In a third operation 3, an observed configurations database stores each configuration candidate and its validity label.

In a fourth operation 4, an inductive logic programming engine processes the content of the observed configurations database and outputs a rule base storing compatibility rules.

Of course, at least some of these operation can be executed in parallel and/or recurrently. For example, the third operation of storing can be executed after each configuration candidate has been generated and labeled. In other words, the first three operations can be performed iteratively in a loop, wherein a new configuration candidate is generated, labeled and stored in each iteration. Preferably, the fourth operation is executed only after sufficient information has been gathered in the observed configurations database.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1. A computer implemented method for extracting compatibility rules from a black box configuration software, wherein the following operations are performed by modules, and wherein the modules are hardware modules and/or software modules executed by one or more processors:

   - generating (1), by a candidate generator (CG), configuration candidates (CC), wherein each configuration candidate (CC) identifies components of an industrial automation system and their connections,
   - receiving (2), from a black-box configuration software (BBS), for each configuration candidate (CC) a valid response (VR) or an invalid response (IR) and creating a corresponding validity label,
   - storing (3), by an observed configurations database (OC), each configuration candidate (CC) and its validity label, and
   - outputting (4), by an inductive logic programming engine (ILPE) processing the content of the observed configurations database (OC), a rule base (RB) storing compatibility rules.

2. The method of claim 1,

   - wherein the candidate generator (CG) receives as one of its inputs a domain vocabulary (DV).

3. The method according to any of the preceding claims,

   - wherein the candidate generator (CG) receives as one of its inputs a reward that is calculated by a candidate discriminator (CD), and
   - wherein the reward in particular encourages that the configuration candidates (CC) generated by the candidate generator (CG) are diverse and substantially different from the configuration candidates (CC) already stored in the observed configurations database (OC).

4. The method according to claim 3,

   - wherein the reward is high if the configuration candidate (CC) currently generated by the candidate generator (CG) leads to high uncertainty in the candidate discriminator (CD), and
   - wherein the reward is in particular calculated as the entropy of a predicted probability distribution of the candidate discriminator (CD).

5. The method according to any of the preceding claims 3 and 4,

   - wherein the candidate discriminator (CD) has been trained using binary cross entropy to act as a differentiable approximation of the rule base (RB).

6. The method according to any of the preceding claims 3-5,

   - wherein the candidate discriminator (CD) has been trained to learn which configurations are similar in a latent constraint space.

7. The method according to any of the preceding claims,

   - wherein the candidate generator (CG) is a policy-based reinforcement learning agent that builds up each configuration candidate (CC) in an iterative fashion, in particular formulated as a Markov Decision Process, starting from an empty configuration and adding components and connections until a terminal state is reached.

8. The method according to any of the preceding claims,

    - wherein the candidate generator (CG) is implemented as a Graph Convolutional Policy Network.

9. A system (CRES) for extracting compatibility rules from a black box configuration software, comprising:

    - a candidate generator (CG), configured for generating configuration candidates (CC), wherein each configuration candidate (CC) identifies components of an industrial automation system and their connections,
    - an interface, configured for receiving, from a black-box configuration software (BBS), for each configuration candidate (CC) a valid response (VR) or an invalid response (IR) and creating a corresponding validity label,
    - an observed configurations database (OC), configured for storing each configuration candidate (CC) and its validity label, and
    - an inductive logic programming engine (ILPE), configured for processing the content of the observed configurations database (OC) and outputting a rule base (RB) storing compatibility rules.

10. A computer program product comprising instructions which, when the program is executed by a computer, cause the computer to carry out a method according to one of the method claims.

11. A provisioning device for the computer program product according to the preceding claim, wherein the provisioning device stores and/or provides the computer program product.

# FIG 1

# FIG 2

# FIG 3

FIG 4

EP 4 502 785 A1

FIG 5

12

FIG 6

Europäisches
Patentamt

European
Patent Office

Office européen
des brevets

# EUROPEAN SEARCH REPORT

Application Number

EP 23 18 9188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SRIRAM SANKARANARAYANAN ET AL: "Mining library specifications using inductive logic programming", 30TH INTERNATIONAL CONFERENCE ON SOFTWARE ENGINEERING : ICSE 2008 ; MAY 10 - 18, 2008, LEIPZIG, GERMANY, CURRAN, RED HOOK, NY, 10 May 2008 (2008-05-10), pages 131-140, XP058176214, DOI: 10.1145/1368088.1368107 ISBN: 978-1-60558-079-1 * abstract * * paragraph [1.Introduction] * * paragraph [4.LearningSpecifications] – paragraph [5.TransactionGeneration] * | 1-11 | INV. G06F8/30 G06F8/70 G06N3/08 |
| X | EP 4 006 674 A1 (SIEMENS AG [DE]) 1 June 2022 (2022-06-01) * paragraph [0002] – paragraph [0018] * * paragraph [0021] – paragraph [0032] * | 1-11 | |
| A | US 2023/143937 A1 (WACHI AKIFUMI [JP] ET AL) 11 May 2023 (2023-05-11) * paragraph [0004] – paragraph [0006] * * paragraph [0026] – paragraph [0065] * * paragraph [0074] – paragraph [0076] * | 1-11 | TECHNICAL FIELDS SEARCHED (IPC) G06F G06N |

The present search report has been drawn up for all claims

| Place of search | Date of completion of the search | Examiner |
|---|---|---|
| Munich | 4 January 2024 | Kusnierczak, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 9188

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2024

| Patent document cited in search report | | Publication date | Patent family member(s) | | Publication date |
|---|---|---|---|---|---|
| EP 4006674 | A1 | 01-06-2022 | NONE | | |
| US 2023143937 | A1 | 11-05-2023 | US 2023143937 | A1 | 11-05-2023 |
| | | | WO 2023083113 | A1 | 19-05-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YOU, JIAXUAN et al.** Graph convolutional policy network for goal-directed molecular graph generation. *Advances in neural information processing systems*, 2018, vol. 31

- **QUINLAN, J. ROSS**. Learning logical definitions from relations. *Machine learning*, 1990, vol. 5, 239-266